# EUROPEAN PATENT APPLICATION

(11) **EP 2 031 268 A1**
(43) Date of publication of application: **04.03.2009**
(21) Application number: 07744603.7
(22) Date of filing: 01.06.2007
(51) Int. Cl.: F16F 9/32, F16F 9/05

(54) **AIR SPRING**

(30) Priority: 05.06.2006 JP 2006155530
(71) Applicant: FUKOKU Co., Ltd., Chuo-ku Saitama-shi Saitama 330-6024 (JP)
(72) Inventor: KOIKE, Kiyotaka, Saitama-shi, Saitama 330-6024 (JP); KAWAMURA, Masamiki, Saitama-shi, Saitama 330-6024 (JP)
(74) Representative: Vogel, Andreas
(86) International application number: PCT/JP2007/061216
(87) International publication number: WO 2007/142153

(57) **Abstract**

A piston 30 of a pneumatic spring 17 is constituted by a first piston body 34 having an attachment cylinder portion 34a and a flange portion 34b, and by a second piston body 35 having a main cylinder portion 35a and a closing wall 35b. Thereby, rigidity of the second piston body 35 is enhanced by unifying the main cylinder portion 35a and the closing wall 35b, and a leak of compressed air from air chambers 31 and 41 to the outside can be definitely suppressed. In a shaping step of the piston 30, the air chamber 31 is formed by demolding from a side of the main cylinder 35a opposite to the closing wall 35b, so that a post-step of forming the air chamber 31 becomes unnecessary, and a manufacturing process of the piston 30 can be simplified.

## Description

### TECHNICAL FIEID

The present invention relates to a pneumatic spring, which is mounted between a sprung side and an unsprung side of a large vehicle, or construction machinery, et al. and relieves propagation of vibration from the sprung side to the unsprung side or from the unsprung side to the sprung side.

### PRIOR ART

Conventionally, between a body side (sprung side) and an axle side (unsprung side) of a large vehicle such as a truck, a bus, and a railcar and between a control deck (sprung side) and a chassis frame (unsprung side) of construction machinery such as a power shovel car, particularly, for the purpose of improving ride comfort by relieving propagation of vibration and shock from the unsprung side to the sprung side, a pneumatic spring type suspension apparatus has been mounted.

The pneumatic spring type suspension apparatus has a pneumatic spring with an air chamber to and from which air from the outside is supplied and discharged; and a shock absorber (shock absorbing apparatus) provided in parallel with this pneumatic spring. This pneumatic spring type suspension apparatus has the advantages that it is possible to hold, by supplying and discharging compressed air to and from the air chamber depending on a load on the sprung side, posture of the sprung side steady to ensure a suspension stroke; and to set, by utilizing elasticity of air, its spring constant lower than that of a coil spring to achieve improvement of the ride comfort.

As a type of the pneumatic spring, a diaphragm type pneumatic spring has been known, and this diaphragm type pneumatic spring is schematically constituted by: a rubber-made cylindrical elastic membrane (diaphragm) inside which reinforcement cords (metal wires) are internally installed; a plate-shaped attachment member mounted on the sprung side of this diaphragm; and a piston mounted on the unsprung side of the diaphragm and forming the air chamber therein together with the diaphragm.

The piston employed in the pneumatic spring is generally formed by pressing, casting, or the like of a metal material (sheet steel etc.); there is the problem that its weight increases as well as its cost such as a material cost increases; and there is a limitation regarding a response to needs of weight-saving or cost-reduction. Hence, the piston employed in the pneumatic spring is shaped by a resin material such as a synthetic resin; the pneumatic spring with the resin-made piston, which can solve the above-mentioned problem has been known; and such a pneumatic spring is described in, for example, Patent Document 1.
Patent Document 1: Japanese Patent Application Laid-Open Publication No. 2004-316785

### DISCLOSURE OF THE INVENTION

### PROBLEMS TO BE SOLVED BY THE INVENTION

The pneumatic spring described in above-mentioned Patent Document 1 has a double cylinder structure, in which a bottomed cylinder portion having a communicating portion radially communicating with a main cylinder portion which constitutes a piston is internally installed, wherein both end sides (sprung side and unsprung side) of the main cylinder portion are opened. And, by adopting such a structure, an air-chamber volume is increased to decrease a spring constant, and demolding in a piston-shaping step is performed without difficulty.

However, according to the pneumatic spring described in Patent Document 1, a lid member which is another member separate from the main cylinder portion is tightly mounted via an O-ring on the unsprung side of the main cylinder portion of the piston and, in such a state, each of them is unified by a single connection bolt. Therefore, when a large load is impulsively imposed on the pneumatic spring, for example when the pneumatic spring is employed in a large truck for running onto concave portions on a road surface in a loaded condition, internal pressure of the air chamber rises sharply and there is a fear that the compressed air leaks to the outside from between the main cylinder portion and the lid member which are in a tightly-mounted condition. Also, because the main cylinder portion and the lid member need to be shaped with high strength for being able to withstand the repeated loads for a long period of time, a manufacturing cost has increased.

Furthermore, because a connection portion of the main cylinder portion and the lid member is arranged at the unsprung side, the connection portion is always exposed to the outside, whereby the connection portion is subjected to rain and wind, and dust etc. is interposed in the connection portion, which results in a fear of bringing early deterioration of the O-ring.

Also, as a post-step after the piston shaping step is finished and then demolding is performed, the communicating portion needs to be shaped in its bottomed cylinder portion by drilling etc., and its manufacturing process has been complicated.

The present invention is made in view of the above-mentioned various problems, and its object is to provide a pneumatic spring, which can ensure a large air-chamber volume along with adoption of a resin-made piston, definitely suppress a leak of compressed air from an air chamber, and further achieve simplification of a manufacturing process.

### MEANS FOR SOLVING THE PROBLEMS

A pneumatic spring according to the present invention, which is mounted between a sprung side and an unsprung side to relieve vibration propagated from the sprung side to the unsprung side or from the unsprung side to the sprung side, comprises: an attachment member attached to the sprung side or unsprung side; a resin-made piston attached to the unsprung side or sprung side; and a cylindrical elastic membrane mounted between the attachment member and the piston, having a fold-back portion on one side, and forming an air chamber therein, wherein the piston is constituted by a first piston body, which has an attachment cylinder portion attached to the fold-back portion, and a flange portion whose inner periphery side is connected to one end side of the attachment cylinder portion and by a second piston body, which has a main cylinder portion whose other end side is connected to an outer periphery side of the flange portion, and a closing wall blocking one end side of the main cylinder portion.

The pneumatic spring according to the present invention is such that a connection portion of the first piston body and the second piston body is able to be covered by the fold-back portion of the cylindrical elastic membrane.

The pneumatic spring according to the present invention comprises: a mounting portion provided protrudingly toward the sprung side from the closing wall, a side of the mounting portion opposite to a protruding side being mounted on the unsprung side; and reinforcement ribs provided between an outer periphery portion of the mounting portion and an inner periphery portion of the main cylinder portion to extend radially therebetween.

The pneumatic spring according to the present invention is such that the first piston body is positioned at a predetermined location with respect to a radial direction of the second piston body by the reinforcement ribs.

The pneumatic spring according to the present invention is such that the first piston body and the second piston body are unified by melt and adhesion of a connection portion of the first piston body and the second piston body.

The pneumatic spring according to the present invention is such that the first piston body and the second piston body are shaped so that the air-chamber volume with respect to external volumes of the first piston body and the second piston body becomes 40% or more.

### EFFECTS OF THE INVENTION

According to the pneumatic spring of the present invention, because the resin-made piston is constituted by the first piston body having the attachment cylinder portion and the flange portion, and by the second piston body having the main cylinder portion and the closing wall, making the piston lightweight can be achieved. Also, rigidity of the second piston body can be enhanced by unifying the main cylinder portion and the closing wall, so that a leak of the compressed air from the air chamber to the outside can be definitely suppressed. Additionally, in a piston shaping step, because the air chamber is formed by demolding from a side of the main cylinder portion opposite to the closing wall of the second piston body, a post-step for forming the air chamber becomes unnecessary, whereby a manufacturing process can be simplified.

According to the pneumatic spring of the present invention, because the connection portion of the first piston body and the second piston body can be covered by the fold-back portion of the cylindrical elastic membrane, the connection portion of the respective piston bodies can be prevented from being always exposed to the outside. Therefore, the connection portion of the respective piston bodies is protected by the fold-back portion of the cylindrical elastic membrane, whereby deterioration of the connection portion of the respective piston bodies can be suppressed.

According to the pneumatic spring of the present invention, it has the mounting portion protruding from the closing wall toward the sprung side, and the reinforcement ribs extending radially between the outer periphery portion of the mounting portion and the inner periphery portion of the main cylinder portion, so that rigidity of the second piston body is enhanced and, as a result, rigidity of the entire piston can be enhanced.

According to the pneumatic spring of the present invention, because the first piston body is positioned at a predetermined location with respect to a radial direction of the second piston body by the reinforcement ribs, the first piston body can be automatically centered with respect to the second piston body, whereby making assembly work more efficient can be achieved.

According to the pneumatic spring of the present invention, because the connection portion of the first piston body and the second piston body is unified by melt and adhesion, joint strength between the first piston body and the second piston body can be improved.

According to the pneumatic spring of the present invention, since each of the piston bodies is formed so that the air-chamber volume with respect to the external volume of the piston becomes 40% or more, the air-chamber volume is sufficiently obtained, whereby a spring constant of the pneumatic spring can be decreased.

### BRIEF DESCRIPTION OF THE DRAWINGS

FIG. 1 is a schematic view of a pneumatic spring rigged on a frame of a large truck;
FIG. 2 is a sectional view of the pneumatic spring in FIG. 1;

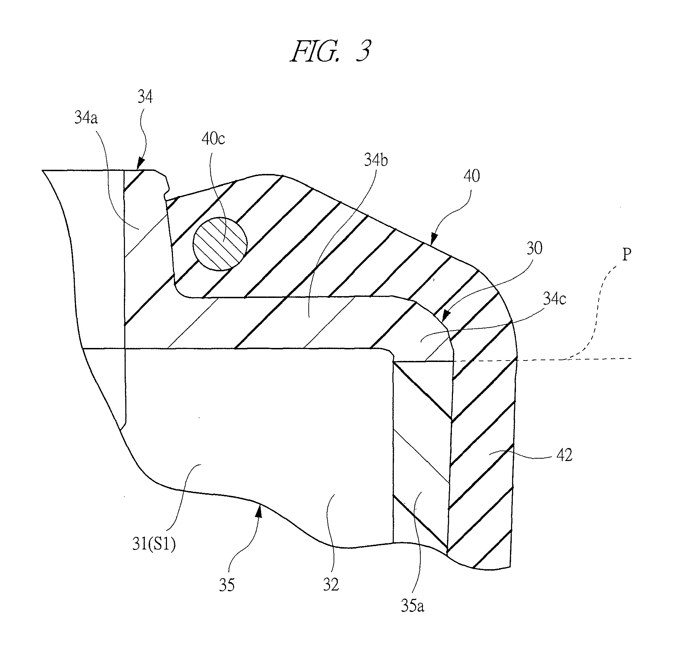

FIG. 3 is a partially-enlarged sectional view showing enlargement of a portion of a dashed-line circle A in FIG. 2;
FIGs. 4A and 4B are a plan view and a bottom view of a piston of the pneumatic spring as shown in FIG. 2;
FIGs. 5A and 5B are sectional views dismountingly showing the piston of the pneumatic spring as shown in FIG. 2;
FIGs. 6A to 6D are connection flow charts showing connection sequences of a first piston body and a second piston body;
FIGs. 7A and 7B are operative sectional views showing a compressed state and an elongated state of the pneumatic spring as shown in FIG. 2;
FIGs. 8A and 8B are sectional views dismountingly showing a piston of a pneumatic spring according to a second embodiment; and
FIGs. 9A and 9B are sectional views dismountingly showing a piston of a pneumatic spring according to a third embodiment.

### BEST MODE FOR CARRYING OUT THE INVENTION

Hereinafter, a pneumatic spring according to a first embodiment of the present invention will be detailed based on the drawings.

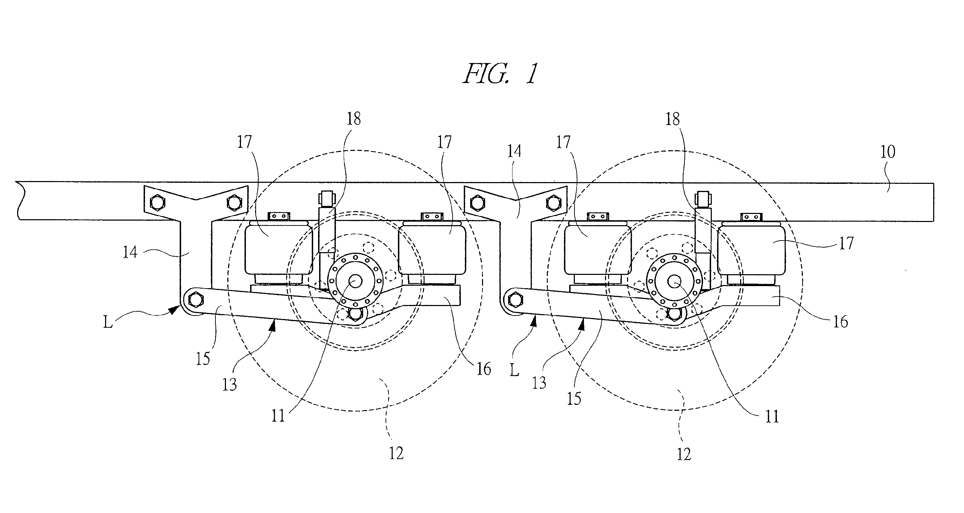

FIG. 1 shows a rear end side of a frame of a large truck (not shown), and a pair of rear axles 11 are provided on the rear end side of this frame 10. A pair of rear wheels 12 are mounted on left and right sides (only one side is shown in the drawings) of each rear axle 11, and each rear axle 11 is supported by a pair of pneumatic spring type suspension apparatuses 13.

The pneumatic spring type suspension apparatus 13 has a linking mechanism L comprising: a coupling member 14 whose one end side is coupled to the frame 10; an arm member 15 whose one end side is coupled rotatably to the other end side of the coupling member 14; and a support member 16 coupled swingably to the other end side of the arm member 15 and supporting the rear axle 11. And, a pair of pneumatic springs 17 and a shock absorber 18 serving as a shock absorbing apparatus are mounted between the frame 10 and the supporting member 16, and each of the pneumatic spring 17 and the shock absorber 18 performs elongating and contracting motions depending on an up-down motion of the supporting member 16 due to an up-down motion of the rear wheel 12.

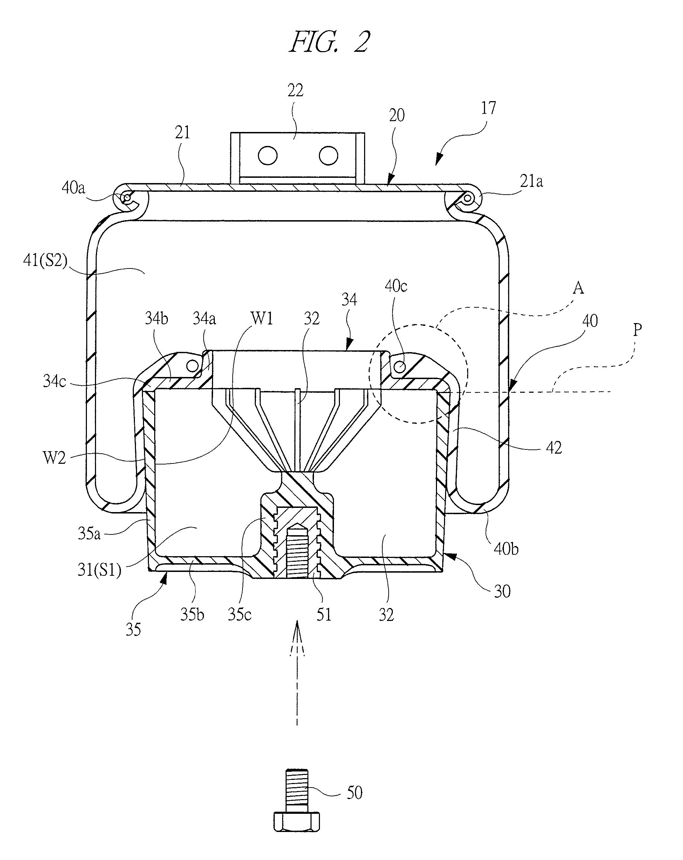

As shown in FIG. 2, the pneumatic spring 17 is a so-called diaphragm type pneumatic spring, and this pneumatic spring 17 has a plate-shaped attachment member 20, a piston 30 serving as a pneumatic-spring piston made of a synthetic resin material such as plastic, and a rubber-made diaphragm 40 serving as a cylindrical elastic membrane provided between the plate-shaped attachment member 20 and the piston 30.

The plate-shaped attachment member 20 serving as an attaching member is shaped into a substantially disk shape by pressing etc. of a metal plate material such as sheet steel for punching, and this plate-shaped attachment member 20 has a main portion 21 and an attachment bracket 22. The main portion 21 and the attachment bracket 22 are connected to each other by fixing means such as welding, and the attachment bracket 22 is attached to the frame 10 serving as the sprung side of the large truck as shown in FIG. 1 via fastening means such as bolts (not shown).

At an outer periphery portion of the main portion 21, annular curled portions 21a are formed so as to be folded downward in the Figure, and this curled portion 21a surrounds and clamps a portion of the diaphragm 40, in which a metal wire 40a of the sprung side (upward in Figure) is internally installed, so as to hold airtightness as well as to prevent the diaphragm 40 from falling out (dropping off).

An air chamber 31 (air-chamber volume S1) is formed inside the piston 30, and this air chamber 31 is set so as to be able to communicate with an air chamber 41 (air-chamber volume S2) formed inside the diaphragm 40. The air chambers 31 and 41 communicate with each other so as to induce no flow resistance with respect to an airflow between them, whereby the air-chamber volume determining the spring constant of the pneumatic spring 17 is decided by a sum of the air-chamber volumes S1 and S2 of the respective air chambers 31 and 41.

The air-chamber volume S1 of the air chamber 31 in the piston 30 is set to become 40% or more of an external volume of the piston 30, i.e., of an entire volume including resin-material portions (thick portions such as reinforcement ribs 33 and a main cylinder portion 35a as mentioned later) forming the piston 30, whereby the air-chamber volume S1 is sufficiently obtained. For this reason, because strength of the piston 30 is satisfactorily set as well as a more volume of air can be used as a medium of the pneumatic spring 17, the spring constant of the pneumatic spring 17 can be set lower to obtain good ride comfort (vibration isolation characteristic). Also for heat generation due to repetitive compression of the pneumatic spring 17, because the large volume of air to be compressed is ensured, rising of temperature can be suppressed

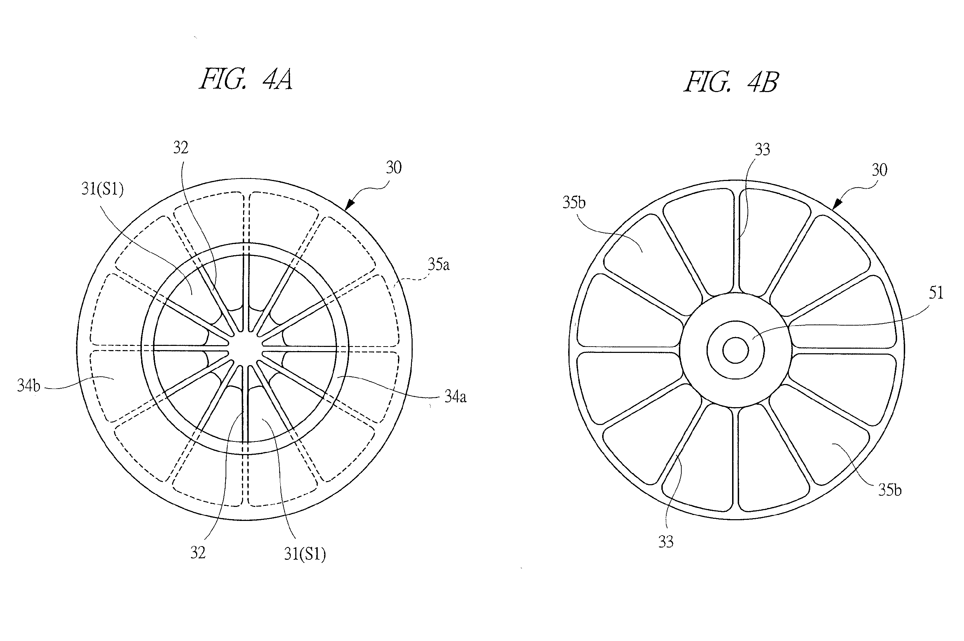

Inside the air chamber 31 of the piston 30 and outside a bottom portion (lower end side in Figure) thereof, as shown in FIGs. 4A and 4B, twelve reinforcement ribs 32, 32, ... and 33, 33, ... are each formed so as to radially extend from a center portion of the piston 30 and to be evenly spaced 30° apart into 12 pieces. By these reinforcement ribs 32 and 33, the piston 30 is reinforced, whereby its rigidity is enhanced.

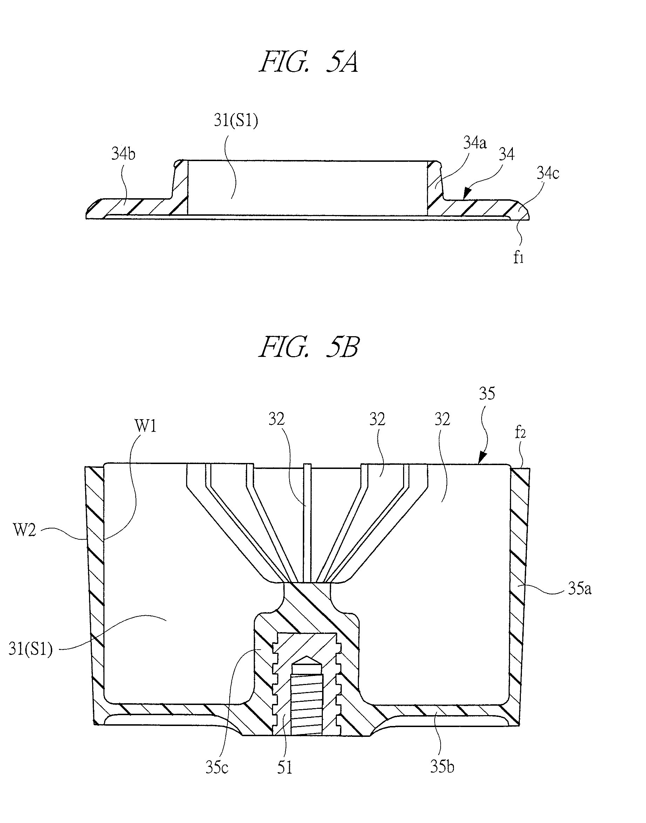

The piston 30 is constituted by, as shown in FIG. 5, a first piston body 34 located on the sprung side and a second piston body 35 located on the unsprung side, and these piston bodies 34 and 35 are both formed of the same synthetic resin material such as plastic.

The first piston body 34 has: an attachment cylinder portion 34a attached to a fold-back portion 42 formed by folding back inward the unsprung side (lower in Figure) of the diaphragm 40; and a substantially doughnut-shaped flange portion 34b whose inner periphery side is connected to a lower end side of this attachment cylinder portion 34a in the Figure. The attachment cylinder portion 34a forms the air chamber 31 of the piston 30, and serves as a communication path communicating with the air chamber 31 and the air chamber 41.

A folded portion 34c is formed on an outer periphery side of the flange portion 34b so as to be bent downward, and a lower direction of this folded portion 34c in the Figure is provided with an annular first abutting surface f1, which abuts on a second abutting surface f2 of the main cylinder portion 35a as mentioned later. Here, an outer periphery side of the flange portion in the present invention means an abutting surface which abuts on the second abutting surface f2 of the second piston body 35, i.e., a portion of the first piston body 34 having the abutting surface f1, and the outer periphery side of the flange portion according to the present embodiment is constituted by the folded portion 34c and the first abutting surface f1.

The second piston body 35 has: the main cylinder portion 35a having the annular second abutting surface f2 which abuts on the first abutting surface f1 of the folded portion 34c of the flange portion 34b; and a closing wall 35b formed integrally with a lower end side of the main cylinder portion 35a in the Figure and blocking the lower end side of the main cylinder portion 35a in the Figure.

An inner periphery wall W1 and an outer periphery wall W2 of the main cylinder portion 35a each have a predetermined slope angle with respect to a perpendicular axis of the second piston body 35 so as to easily remove them from casting molds (not shown) shaping the second piston body, for example, and preferably set a draft angle of the inner periphery side to a range of 0.5° to 1.5° and a draft angle of the outer periphery side to a range of 0.5° to 3.5°.

Formed integrally with a center portion of the closing wall 35b is a cylindrical mounting portion 35c, which is formed protrudingly toward the air chamber 31 (sprung side) and is mounted, opposite its protruding side via a bolt 50 (see FIG. 2), on the support member 16 (see FIG. 1) serving as the unsprung side. Inside this mounting portion 35c, a metal nut member 51 to be screwed by the bolt 50 is internally installed, and an outline of this nut member 51 is composed of a plurality of stepped shapes and is rigidly fixed to the mounting portion 35c, thereby being prevented from falling out (dropping off) from the mounting portion 35c.

Inside the air chamber 31 and between the outer periphery portion of the mounting portion 35c and the inner wall (inner periphery portion) W1 of the main cylinder portion 35a, the reinforcement ribs 32, 32, ... are formed integrally so as to be connected to one another and extend radially, and each thickness dimension of these reinforcement ribs 32 is set at about 3 mm. Incidentally, the number of the reinforcement ribs 23 and the thickness dimension of each of them are to be appropriately set according to rigidity of the piston 30 to be required, and at this case, the air-chamber volume S1 of the air chamber 31 in the piston 30 may be set to be 40% or more with respect to the exterior volume of the piston 30 for the above-mentioned reason.

Internally installed in the diaphragm 40 are reinforcement cords (not shown), which are made of polyamide type resins et al. and obliquely arranged between an outer layer rubber (outer periphery side) not shown and an inner layer rubber (inner periphery side) not shown, thereby being reinforced so that the diaphragm 40 itself does not expand by the pressure of the compressed air supplied into the air chamber 41.

A fold-back portion 42 provided to the diaphragm 40 is constituted by a radially inward portion of an arch portion 40b formed on the lower end side of the diaphragm 40 in the Figure, and an inner periphery side of the fold-back portion 42 contacts to the outer periphery wall W2 of the main cylinder portion 35a. And, this fold-back portion 42 can cover a connection portion P of the first piston body 34 and the second piston body 35. A metal wire 40c is internally installed in the upper end side (upper in the Figure) of the fold-back portion 42, and by this metal wire 40c being fitted in the attachment cylinder portion 34a, the attachment cylinder portion 34a is fixed firmly to the fold-back portion 42.

Next, a connecting method for the first piston body 34 and the second piston body 35 (assembling method of the piston 30) will be described in detail with reference to the drawings.

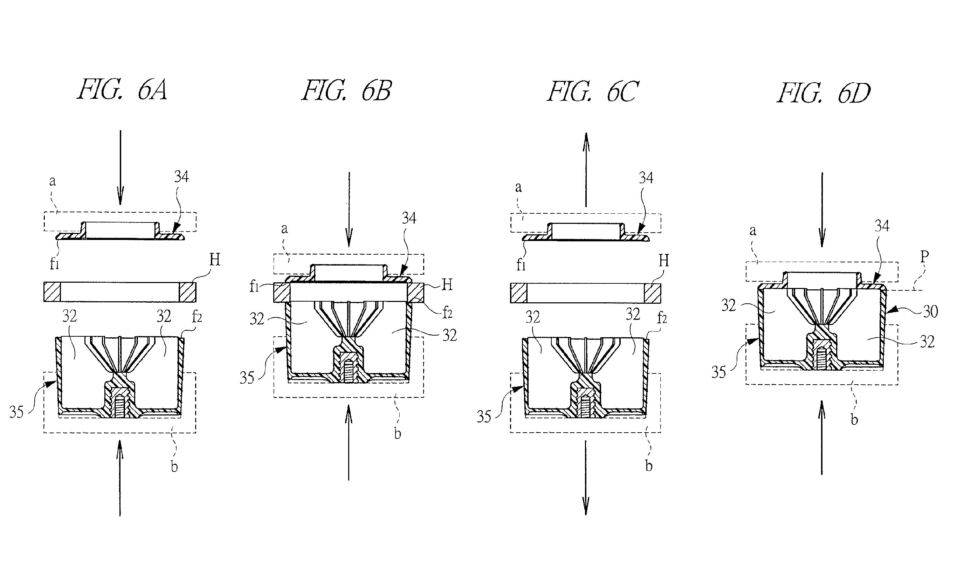

In the present embodiment, the first piston body 34 and the second piston body 35 are connected by melting their mutual connection portions. As shown in FIG. 6A, first, the synthetic-resin first piston body 34 and second piston body 35, which are shaped by an injection molding step etc. that are separate steps, are prepared (piston body preparing step). Next, the respective piston bodies 34 and 35 prepared in the piston body preparing step are set in fixing jigs "a" and "b" which have such shapes as to be shown by dashed lines in the Figure (piston body setting step). Here, the fixing jigs "a" and "b" are grasped by a grasping mechanism et al. (not shown) so that respective center axes of the piston bodies 34 and 35 are not offset.

Then, as shown in FIG. 6A, a substantially doughnut-shaped heating jig H is located between the piston bodies 34 and 35 opposing to each other. Here, in this heating jig H, for example, heating means (not shown) such as an electrical resistance heater is internally installed, and by this heating means, the heating jig H is set at predetermined temperature (melting temperature of a synthetic-resin material).

Next, as shown by arrows from a condition as shown in FIG. 6A, the fixing jigs "a" and "b" are driven so as to be close to each other by a driving mechanism (not shown). By this closing motion of the fixing jigs "a" and "b", the annular first abutting surface f1 of the first piston body 34 and the annular second abutting surface f2 of the second piston body 35 abut on upper and lower surfaces of the heating jig H in the Figure, respectively, and the first abutting surface f1 and the second abutting surface f2 are each melted (softened) (connection portion melting step).

Thereafter, as shown by arrows of FIG. 6C, the fixing jigs "a" and "b" are separated from each other by driving the driving mechanism. Then, after the first piston body 34 and the second piston body 35 are separated, the heating jig H is promptly moved horizontally by the driving mechanism (not shown). By driving the driving mechanism subsequently as shown by arrows of FIG. 6D, the fixing jigs "a" and "b" are again made close to each other. Then, the first abutting surface f1 and the second abutting surface f2, which are melted or softened, are pressed together by a predetermined pressing force, thereby which the first piston body 34 and the second piston body 35 are joined (melting and joining step).

At this time, because upper end surfaces of the reinforcement ribs 32 in the Figure protrude slightly upward in the Figure from the second abutting surface f2, the first piston body 34 is automatically positioned (centered) at a predetermined location with respect to a radial direction of the second piston body 35. Incidentally, connection of the first piston body 34 and the second piston body 35 is made only by melt of the first abutting surface f1 and the second abutting surface f2, and the reinforcement ribs 32 and the flange portion 34b are not connected. This is because: the pneumatic spring 17 according to the present invention is used in a compressed state by properly receiving self-weight of the sprung side from a substantially perpendicular direction; and therefore since the reinforcement ribs 32 of the second piston body 35 have only to support at least a load from the flange portion 34b of the first piston body 34, it is not absolutely necessary to make the reinforcement ribs 32 and the flange portion 34 fixed and adhering to each other. For this reason, for example, disassembling of the pneumatic spring 17 after its removal can be facilitated, whereby good recycling characteristics etc. of resin materials et al. are made better.

Next, an operation of the pneumatic spring 17 according to the first embodiment of the present invention, which has the above-mentioned structure, will be described in detail based on the drawings.

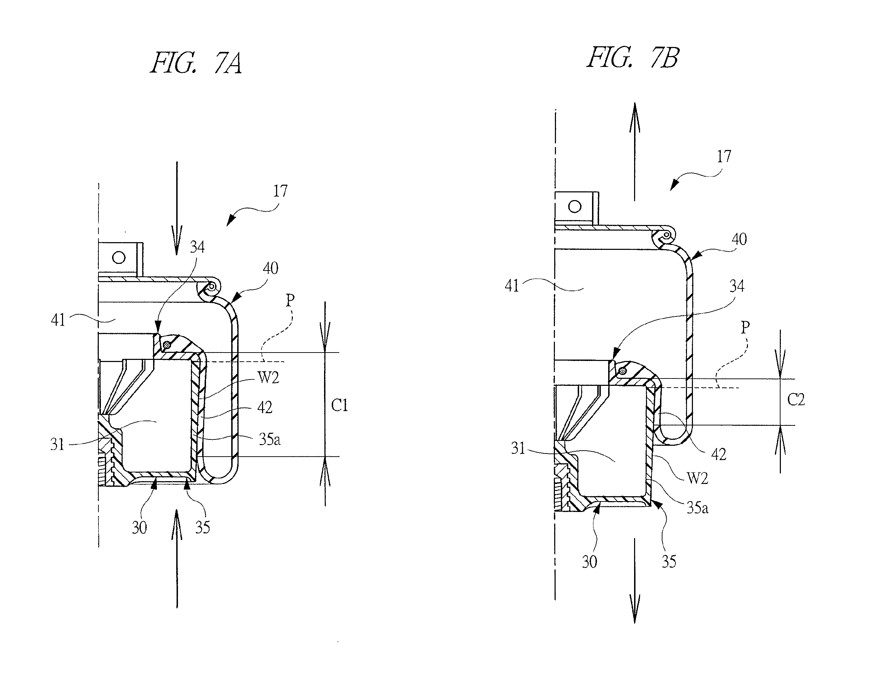

FIGs. 7A and 7B show normal operation states of the pneumatic spring 17, i.e., a compressed state (bump) and an elongating state (rebound) in which a load on the large truck is within an appropriate loading range and the large truck is travelling on a road surface except a bad road such as a very bumpy, unpaved road.

As shown by arrows of FIG. 7A, when the pneumatic spring 17 is compressed due to running etc. of the large truck onto convex portions of the road surface, air inside the air chambers 31 and 41 is compressed, and their volumes decrease. For this reason, the fold-back portion 42 of the diaphragm 40 rolls the outer periphery wall W2 of the main cylinder portion 35a of the piston 30 and contacts thereto within a contact range C1 during the rolling. At this time, a connection portion P of the first piston body 34 and the second piston body 35 is in a covered state by the fold-back portion 42 of the diaphragm 40, and the connection portion P is within the contact range C1.

Here, for example, even when the pneumatic spring 17 is further compressed due to travelling etc. of the large truck on the bad road such as a very bumpy, unpaved road so that pressure inside the air chambers 31 and 41 increases impulsively, the connection portion P is covered and pressed by the fold-back portion 42, thereby making it possible to protect the piston 30 from high pressure exerted in a direction of separating the connection portion P.

On the other hand, as shown by arrows of FIG. 7B, when the pneumatic spring 17 is elongated due to the running etc. of the large truck onto the convex portions of the road surface, air in the air chambers 31 and 41 expands, and their volumes increase. For this reason, the fold-back portion 42 of the diaphragm 40 rolls the outer periphery wall W2 of the main cylinder portion 35 of the piston 30 and contacts thereto within a contact range C2 during the rolling. At this time, the connection portion P of the first cylinder body 34 and the second cylinder body 35 is in the covered state by the fold-back portion 42 of the diaphragm 40 similarly to a case described above, and the connection portion P is within the contact range C2.

Thus, since the pneumatic spring 17 is compressed or elongated depending on concaves and convexes of the road surface and, according thereto, the shock absorber 18 shown in FIG. 1 is elongated and contracted, propagation of vibration to the frame 10 serving as the sprung side can be relieved.

As described above in detail, according to the pneumatic spring 17 that is the first embodiment of the present invention, the resin-made piston 30 is constituted by the first piston body 34 having the attachment cylinder 34a and the flange portion 34b, and by the second piston body 35 having the main cylinder portion 35a and the closing wall 35b, so that making the piston 30 lightweight can be achieved. Also, since the main cylinder portion 35a and the closing wall 35b are unified, rigidity of the second piston body 35 can be enhanced, whereby the leak of compressed air from the air chambers 31 and 41 to the outside can be definitely suppressed. Furthermore, in a shaping step of the piston 30, because the air chamber 31 is formed due to demolding from a side of the main cylinder portion 35a opposite to the closing wall 35b of the second piston body 35, a post-step for forming the air chamber 31 becomes unnecessary, whereby the manufacturing process of the piston 30 can be simplified.

Also, according to the pneumatic spring 17 that is the first embodiment of the present invention, because the connection portion P of the first piston body 34 and the second piston body 35 can be covered by the fold-back portion 42 of the diaphragm 40, the connection portion P of the respective piston bodies 34 and 35 can be prevented from being always exposed to the outside. Therefore, the connection portion P of the respective piston bodies 34 and 35 is protected by the fold-back portion 42 of the diaphragm 40, and deterioration of the connection portion P of the respective piston bodies 34 and 35 can be suppressed.

Further, according to the pneumatic spring 17 according to the first embodiment of the present invention, it has the mounting portion 35c protruding from the closing wall 35b toward the air chamber 31, and the plurality of reinforcement ribs 32, 32, ... radially extending between the outer periphery portion of the mounting portion 35c and the inner periphery portion of the main cylinder portion 35a, so that rigidity of the second piston portion 35 is enhanced and, as a result, rigidity of the entire piston 30 can be enhanced.

Also, according to the pneumatic spring 17 that is the first embodiment of the present invention, the first piston body 34 is positioned at the predetermined location with respect to the radial direction of the second piston body 35 by the reinforcement ribs 32, so that the first piston body 34 can be automatically centered with respect to the second piston body 35, whereby the assembling work can be made more efficient.

Still further, according to the pneumatic spring 17 that is the first embodiment of the present invention, the connection portion P of the first piston body 34 and the second piston body 35 (first abutting surface f1 and second abutting surface f2) is unified by melt and adhesion, joint strength of the first piston body 34 and the second piston body 35 can be improved.

Also, according to the pneumatic spring 17 that is the first embodiment of the present invention, since each of the piston bodies 34 and 35 is shaped so that the air-chamber volume with respect to the exterior volume of the piston 30 becomes 40% or more, the air-chamber volume is obtained sufficiently, whereby the spring constant of the pneumatic spring 17 can be decreased.

Next, a pneumatic piston according to a second embodiment of the present invention will be described in detail based on the drawings. Incidentally, members similar to those of the piston 30 in the pneumatic spring 17 according to the above-mentioned first embodiment are denoted by the same reference numerals, and their detailed description will be omitted.

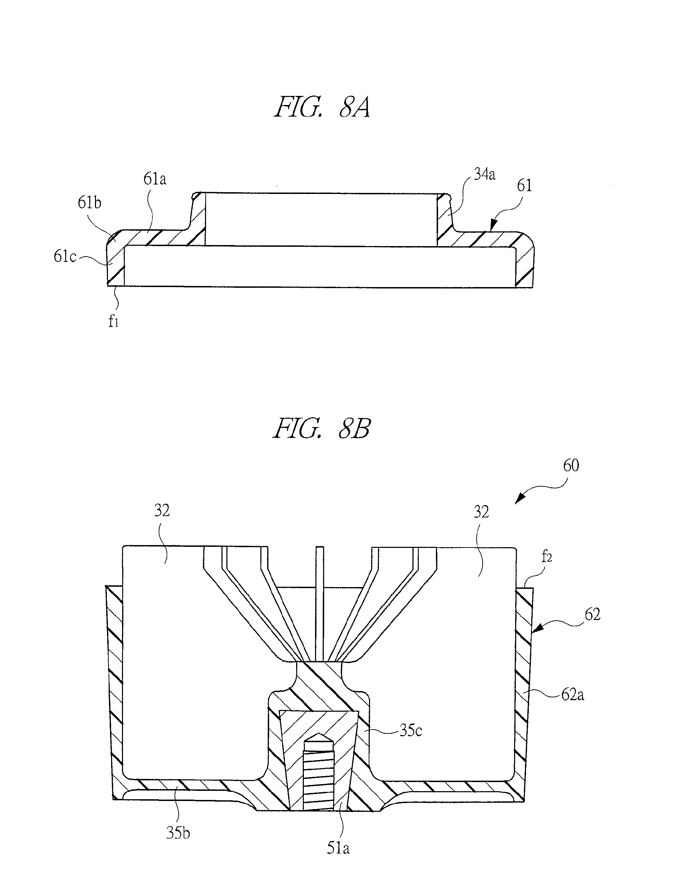

As shown in FIG. 8, a piston 60 according to a second embodiment has a first piston body 61 and a second piston body 62. On an outer periphery side of a flange portion 61a which constitutes the first piston body 61, a folded portion 61b and a cylinder portion 61c are formed so as to be folded downward, and a lower direction of the cylinder portion 61c in the Figure is provided with the annular abutting surface f1, which abuts on the second abutting surface f2 of a main cylinder portion 62a of the second piston body 62. Thus, in the second embodiment, an outer periphery side of the flange portion according to the present invention is constituted by the folded portion 61b, the cylinder portion 61c, and the first abutting surface f1. Herein, the folded portion 61b, which is necessary for forming the cylinder portion 61c having the first abutting surface f1, is also included in the outer periphery side of the flange portion according to the present invention.

Inside the mounting portion 35c formed at a center portion of the closing wall 35b, a metal nut member 51a to be screwed by a bolt 50 shown in FIG. 2 is internally installed, and an outline of this nut member 51a is set at a truncated cone, whose diameter is gradually reduced as being moved in a lower direction of the Figure, whereby falling out (dropping off) from the mounting portion 35c is prevented.

Also in this piston 60 according to the second embodiment, the connection portion P constituted by the first abutting surface f1 and the second abutting surface f2 can be covered by the fold-back portion 42 of the diaphragm 40 as shown in FIG. 2, which results in suppressing of deterioration of the connection portion P.

Also in the second embodiment constituted as described above, operations and effects similar to those of the above-mentioned first embodiment can be achieved. In addition thereto, in the second embodiment, because the cylinder portion 61c extending downward in the Figure is provided on the outer periphery side of the flange portion 61a of the first piston body 61, the plurality of reinforcement ribs 32, 32,... enter into this cylinder portion 61c, whereby lateral rigidity of the first piston body 61 with respect to the second piston body 62 can be enhanced.

Next, a pneumatic piston according to a third embodiment of the present invention will be described in detail based on the drawings. Incidentally, members similar to those of the piston 30 of the pneumatic spring 17 according to the above-mentioned first embodiment are denoted by the same reference numerals, and its detailed descriptions will be omitted.

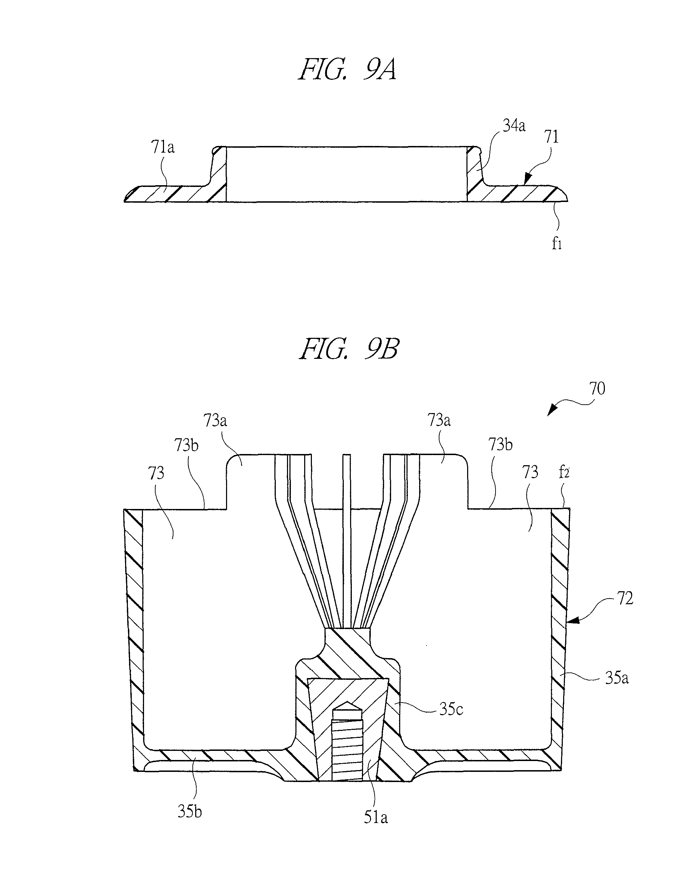

As shown in FIG. 9, a piston 70 according to a third embodiment has a first piston body 71 and a second piston body 72. The first piston body 71 has the attachment cylinder portion 34a and a flange portion 71a, wherein the folded portion 34c shown in the above-mentioned first embodiment is not formed on an outer periphery side of the flange portion 71a. Expanded portions 73a, 73a, ..., which enter into the attachment cylinder portion 34a of the first piston body 71 and center the first piston body 71 with respect to the second piston body 72, are shaped integrally with a plurality of reinforcement ribs 73, 73,..., which are shaped integrally inside the second piston body 72. And, upper surface portions 73b of the reinforcement ribs 73 are formed so as to be set at the same locations as that of the second abutting surface f2 of the main cylinder portion 35a of the second piston body 72 regarding an axial direction.

Also in this piston 70 according to the third embodiment, the connection portion P constituted by the first abutting surface f1 and the second abutting surface f2 can be covered by the fold-back portion 42 of the diaphragm 40 as shown in FIG. 2, whereby deterioration of the connection portion P is suppressed. Incidentally, the nut member 51a of the third embodiment adopts the same structure as that of the above-mentioned second embodiment.

Also, the third embodiment constituted as described above can achieve the same operation and effects as those of the above-mentioned first embodiment. In addition thereto, in the third embodiment, since the upper surfaces 73b of the reinforcement ribs 73 are formed so as to be set at the same locations as that of the second abutting surface f2 of the main cylinder portion 35a of the second piston body 72 regarding the axial direction, a simply constituted annular heating jig is used to be able to melt a lower end surface of the flange portion 71a of the first piston body 71 in the Figure and the upper surface portions 73b of the reinforcement ribs 73 and join them to each other, so that the joint strength of the first piston body 71 and the second piston body 72 can be further improved.

Incidentally, the present invention is not limited to the above-mentioned embodiments, and can be variously modified within a scope of not departing from the gist of the invention. For example, each of the above-mentioned embodiments has shown a case in which the first piston body and the second piston body are joined (melted and adhesive) by melting their respective mutual abutting surfaces. However, the present invention is not limited to such a case, and the first piston body and the second piston body may joined by other adhesive means such as a thermosetting adhesive and an adhesive tape.

Also, in the above-mentioned embodiments, the pneumatic spring 17 has been shown as one used for the pneumatic spring type suspension apparatus 13 rigged between the frame 10 (sprung side) and the rear axle 11 (unsprung side) of the large truck. However, the present invention is not limited to such a case, and can be employed also for a pneumatic spring type suspension apparatus rigged between a chassis and a truck of a railcar or between a control deck and a chassis frame of a power shovel car.

Further, each of the above-mentioned embodiments has described the pneumatic spring 17 in which the attachment member and the piston are arranged at the frame 10 serving as the sprung side and at the supporting member 16 serving as the unsprung side, respectively. However, needless to say, the present invention is not limited to such a case, and can be utilized in an inverted layout condition in which the piston and the attachment member are arranged on the sprung side and on the unsprung side, respectively, depending on demands of subjects to be rigged with the pneumatic spring, or functional circumstances, etc.

### INDUSTRIAL APPLICABILITY

The pneumatic spring of the present invention is mounted between the sprung side and the unsprung side on the large vehicle, or construction machinery, et al., thereby using to relieve vibration propagated from the sprung side to the unsprung side or from the unsprung side to the sprung side.

## Claims

1. A pneumatic spring mounted between a sprung side and an unsprung side to relieve vibration propagated from the sprung side to the unsprung side or from the unsprung side to the sprung side, the pneumatic spring comprising:
an attachment member attached to the sprung side or unsprung side;
a resin-made piston attached to the unsprung side or sprung side; and
a cylindrical elastic membrane mounted between the attachment member and the piston, having a fold-back portion on one side, and forming an air chamber therein,
wherein the piston is constituted by a first piston body, which has an attachment cylinder portion attached to the fold-back portion, and a flange portion whose inner periphery side is connected to one end side of the attachment cylinder portion and by a second piston body, which has a main cylinder portion whose other end side is connected to an outer periphery side of the flange portion, and a closing wall blocking one end side of the main cylinder portion.

2. The pneumatic spring according to claim 1,
wherein a connection portion of the first piston body and the second piston body is able to be covered by the fold-back portion of the cylindrical elastic membrane.

3. The pneumatic spring according to claim 1, comprising: a mounting portion provided protrudingly toward the sprung side from the closing wall, a side of the mounting portion opposite to a protruding side being mounted on the unsprung side; and reinforcement ribs provided between an outer periphery portion of the mounting portion and an inner periphery portion of the main cylinder portion to extend radially therebetween.

4. The pneumatic spring according to claim 3,
wherein the first piston body is positioned at a predetermined location with respect to a radial direction of the second piston body by the reinforcement ribs.

5. The pneumatic spring according to claim 1,
wherein the first piston body and the second piston body are unified by melt and adhesion of a connection portion of the first piston body and the second piston body.

6. The pneumatic spring according to claim 1,
wherein the first piston body and the second piston body are shaped so that the air-chamber volume with respect to external volumes of the first piston body and the second piston body becomes 40% or more.
